Europäisches Patentamt

European Patent Office

Office européen des brevets

(11) Publication number: **0 412 468 B1**

(19)

# EUROPEAN PATENT SPECIFICATION

(12)

(45) Date of publication of patent specification: **30.03.94** (51) Int. Cl.5: **G01C 19/72**

(21) Application number: **90115015.1**

(22) Date of filing: **04.08.90**

(54) **Synthetic serrodyne controller for fiber optic gyroscope.**

(30) Priority: **09.08.89 US 391002**

(43) Date of publication of application:
**13.02.91 Bulletin 91/07**

(45) Publication of the grant of the patent:
**30.03.94 Bulletin 94/13**

(84) Designated Contracting States:
**DE FR GB IT SE**

(56) References cited:
**EP-A- 0 359 666**
**DE-A- 3 104 786**

(73) Proprietor: **HONEYWELL INC.**
**Honeywell Plaza**
**Minneapolis MN 55408(US)**

(72) Inventor: **Bielas, Michael S.**
**2502 W. Roveen**
**Phoenix, AZ 85029(US)**
Inventor: **El-Wailly, Tamim F.**
**6841 W. Emile Bola**
**Peoria, AZ 85345(US)**

(74) Representative: **Herzbach, Dieter, Dipl.-Ing. et al**
**Honeywell Holding AG**
**Patent- und Lizenzabteilung**
**Kaiserleistrasse 39**
**Postfach 10 08 65**
**D-63008 Offenbach (DE)**

## Description

This invention relates to a synthetic serrodyne controller according to the preamble of the independent claims. Such a controller preferably is used in a fiber optic gyro wherein a serrodyne waveform is applied to a single phase-modulator in a closed-loop.

In fiber optic gyroscopes there exists an analogy to traditional electromechanical rate gyros in that either type may be operated "open-loop" or "closed-loop". The closed-loop configuration generally is associated with higher levels of precision than the open-loop type. In an open-loop gyro the basic device output is the direct measure of gyro input rate. In a closed-loop gyro the output is constantly maintained at null by means of an external feedback mechanism which acts to cancel the inertially sensed rotation. In the case of electromechanical gyros this feedback consists of applying a precision torque to the gyro's spinning rotor to maintain the alignment with the gyro case, the current needed to apply the correct torque thus becoming a measure of gyro input rotation. In the case of fiber optic gyros, the appropriate photodetector output current component is continuously maintained at null by the action of a differential phase shift transducer which exactly cancels the phase shift induced by the applied input rate (the "Sagnac" shift) to the two counterpropagation light beams within the fiber. The frequency of the signal voltage to the tranducer becomes the measure of gyro input rate.

In order to generate the differential phase shift, two basic approaches have been employed in the past. One involves the use of acousto-optic frequency shifters (e.g. Bragg cells) which directly change the optical carrier frequency of an input light beam by the amount of the applied signal voltage frequency. Another approach to phase-shifting a light beam is to employ a phase shifter which can vary or modulate the optical path length within itself by application of a signal voltage to it. These phase-shifters (which are several) may be fabricated so as to be an integral part of the fiber coil or formed with vibrating mirrors, or made in integrated optic form or formed by deposition of optically active material on optical fiber. To generate a differential beam phase shift equal and opposite to the Sagnac-induced (i.e. rate induced) phase shift, a special electrical periodic signal in the shape of a sawtooth (a serrodyne waveform) is applied to the phase shifter. The repetition rate of this periodic waveform then becomes the gyro output, along with an additional output to specify the direction of input rate (polarity).

Such a device e.g. is known from DE-A-31 04 786. There, a photodetector generates an output signal according to the Sagnac phase shift of a fiber optic gyro. An evaluation device senses the output signal and acts upon a sawtooth generator which drives a phase modulator within the fiber optic gyro loop in order to compensate for the phase shift. The known device also provides for the generation of two separate sawtooth signals with a positive and a negative slope where those signals are added in the optical phase modulator.

A problem that arises with such a serrodyne modulator when gyro input rates are low is that it becomes difficult to generate the serrodyne voltage waveform. Another problem that arises is the gyro's ability to track rapid variations in input rates is limited. Both difficulties ultimately result in inaccurate gyro scale factor performance.

To overcome the problem of low input rate operation of a serrodyne-modulated fiber optic gyro, several approaches have been implemented in the past. One such approach is to generate variable voltage steps rather than a continuous voltage ramp. One disadvantage is the need to gate or switch out transient pulses. Such gating is a gyro output error source and complicates the electronics circuitry. Another disadvantage is a relatively complex electronics processor that is needed to generate the variable-height phase steps. Another disadvantage is that this method may impose a maximum rate magnitude beyond which the gyro output is not uniquely associated with its input or a limitation on the fiber coil diameter resulting in poor sensitivity.

Another approach to avoid the need to generate serrodyne waveforms at low gyro input rates is to apply a relatively high bias frequency serrodyne voltage to the phase modulator. A disadvantage is one earlier mentioned that in regard to maximum input rate limitation. In addition, this approach generates a large difference in interbeam optical carrier frequency at low gyro input rates resulting in poor gyro bias drift stability.

Departing from those prior art controllers, it is the object of the present invention to devise such a controller which is simple in its design and which may be implemented nearly all digitally. This object is achieved by the features of the independent claims. Further advantageous embodiments of the inventive controller may be taken from the dependent claims.

In the present invention a digitally synthesized serrodyne waveform is applied to a single phase modulator in a closed-loop fiber optic gyroscope. The one phase modulator is operated as a baseband serrodyne frequency shifter. The applied serrodyne signal is synthesized from the digital summation of two binary words which are digital-to-analog converted and amplified. Only one op-amp is required. Reset time is minimized.

Figure 1     is a block diagram of the digital synthetic serrodyne for fiber optic gyroscope, and

Figure 2     is another block diagram embodiment in many ways similar to Figure 1.

Figure 3     shows symbolic waveforms of the digital outputs of the up counter, the down counter and the adder means of Figure 1.

Figure 4     comprising Figs. 4a, b and c is an electrical schematic diagram of portions of the block diagram of Figure 1.

In the digital synthetic serrodyne for fiber optic gyroscope of this invention there is a simplification of the system block diagram in that the output signals of the "up" counter and of the "down" counter of the positive and negative serrodyne generators, respectively, are connected to inputs of adder means. The output of the adder means is connected to a high speed digital-to-analog converter (DAC) and then to an amplifier having its output connected to drive the phase modulator. The advantages of this improved circuit include that only one high speed DAC and AMP are required. This gives faster reset times than any analog duplex or analog synthetic single serrodyne. Also it is all digital except for the phase sensitive demodulator, integrator and DAC.

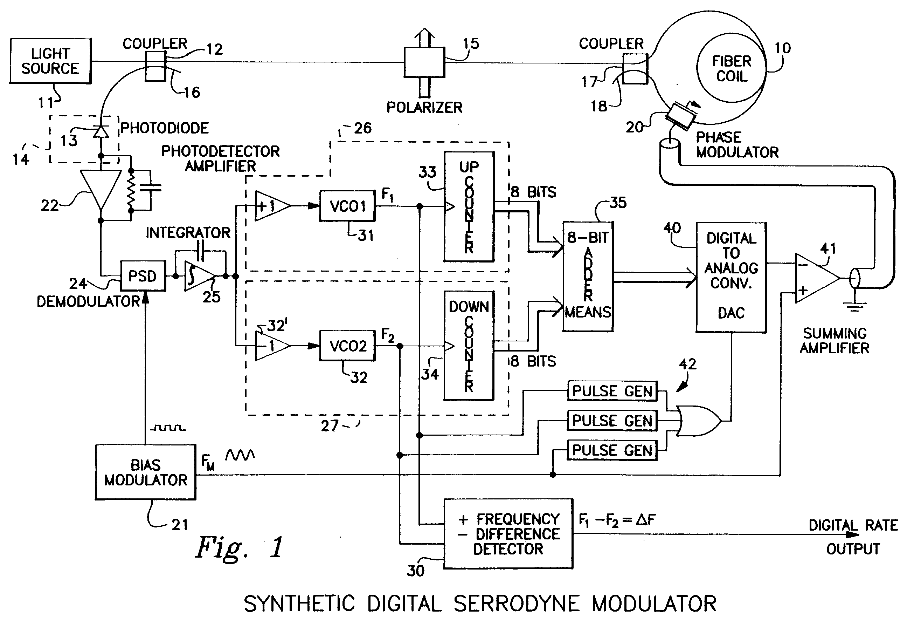

Referring now to Figure 1 there is shown a system diagram of a fiber optic gyroscope system according to the invention. A fiber optic coil 10 is wound on a spool with a typical length of the optical fiber coil on the order of 100 meters to 2000 meters. Electromagnetic (light) waves which propagate in opposite directions through coil 10 are provided from a light source 11. This light source is typically a broad-line width ($\Delta\lambda \approx 20$ nm) superradiant (sometimes called superluminescent) diode, typically emitting in the near-infrared portion of the spectrum (for example at a wavelength of 830 nm to 1500 nm).

Between light source 11 and fiber optic coil 10 there is shown an optical path arrangement formed by an extension of the ends of coil 10 to several optical coupling components 12, 13, 14, 15, 16, 17, 18 and 20 to be described below. A portion of the same kind of polarization-maintaining optical fiber as in coil 10 is positioned at source 11 to receive the light emission therefrom and extends to a first port of an optical directional coupler 12. Optical directional coupler 12 is of a type which has four ports, two on each end. At the other port on the same end of the coupler 12 there is shown a further optical fiber positioned against it and which extends to be positioned against a photodiode 13 which is electrically connected to a photodiode system 14. The photodiode 13 detects the light waves impinging thereon from the adjacent optical fiber and propagating from the coupler 12, and provides a photocurrent, which is a function of the impinging radiation.

Optical directional coupler 12 has another optical fiber against a port at the other end thereof which extends to a polarizer 15. At the other port on that same side of coupler 12 there is a non-reflective termination 16 including another portion of an optical fiber.

Directional optical coupler 12 in receiving light waves in any of its ports transmits such light so that approximately half appears at each of the two ports of coupler 12 on the end thereof opposite that end having the incoming port. No light is transmitted to the port which is on the same end of the coupler 12 as is the incoming light port.

Polarizer 15 has a port on either end thereof with light transmission media continued therein. Positioned against the port on the opposite end thereof opposite that connected to optical directional coupler 12 is another optical fiber portion which extends to a further optical bidirectional coupler 17 which has the same light transmission properties as does coupler 12.

The other port on the same end of coupler 17 from which a port is coupled to polarizer 15 is connected in a non-reflective termination 18 using a further optical fiber section. Now turning to the two ports on the other end of coupler 17, one is directly coupled to one end of the optical fiber in coil 10. The other port is connected to a phase modulator 20 in the optical path extending to the other end of the optical fiber in coil 10. The phase modulator 20 has two ports, one on either end of transmission media contained therein. The optical fiber from coil 10 is positioned against one port of phase modulator 20 and the optical fiber extending from coupler 17 is positioned against the opposite port to complete the optical path followed by light waves from source 11. The phase modulator, loop coupler and polarizer can take the form of a multifunction integrated optic chip if desired.

Phase modulator 20 is capable of receiving electrical signals from the phase difference controller to cause it to introduce a phase difference in light transmitted therethrough by changing the index of refraction of the transmission media therein to change the optical path length.

In operation, the light from source 11 is coupled through the optical fiber portion to optical directional coupler 12. Some of that light entering coupler 12 from source 11 is lost in non-reflective terminating arrangement 16, but the rest of that light is transmitted through polarizer 15 to optical directional coupler 17. Coupler 17 serves as a beam-splitter in that the light entering the port thereof received from polarizer 15 splits in half with one portion thereof passing out of each of the two ports on the opposite end. From the one port light passes through coil 10, through modulator 20 and back to coupler 17. There a portion of that returning light is lost in non-reflective arrangement 18, but the rest of that light passes through the other port of coupler 17 to polarizer 15 and to coupler 12 where a portion of it is transmitted to photodiode 13. The other part of the light from beam-splitter 17 leaving the other port thereof passes through modulator 20 and coil 10 to reenter coupler 17 and, again with a portion thereof following the same path as before the other portion to finally impinge on photodiode 13.

Photodiode 13 provides an output photocurrent proportional to the intensity of the two light waves impinging thereon to the phase difference controller circuit. The output photocurrent depends on the resulting optical intensity of the two waves incident on photodiode 13, which intensity will vary depending on the degree of constructive or destructive interference which occurs between the two light waves. This interference of waves will change with rotation of the coiled optical fiber 10 about its axis as such rotation introduces a phase difference between the waves.

The remainder of Figure 1 shows in block diagram form a electrical system portion which forms a phase difference controller feedback loop from photodiode 13 to the optical path at optical phase modulator 20. Thus the output signal from photodetector system 14, including photodiode 13 is provided to a transimpedance amplifier 22, where it is amplified and passed to a phase sensitive demodulator (PSD) 24 serving as a phase detector. The PSD provides an indication of the relative phase of light waves impinging on the photodiode 13. Integrator 25 receives the output of PSD 24 and stores all error excursions at the output of the PSD and provides a countering output signal based upon the time integral of those errors. The integrator output signal causes a sufficient phase shift in the optical path through modulator 20 to provide zero error, or zero phase difference in the steady state resulting from a constant rotation rate.

The output signal from the integrator 25 is applied to the inputs of a positive serrodyne generator 26 and a negative serrodyne generator 27. The generator 26 comprises a voltage controlled oscillator (VCO) 31 and an "up" counter 33. The generator 27 comprises an inverter 32′, a voltage controlled oscillator 32 and a "down" counter 34. Initial frequencies of both of the VCO's may be at 15 MHz, for example. The output $F_1$ of VCO 31 and the output $F_2$ of VCO 32 are fed to the input of a frequency difference detector 30 which provides a digital rate output $\Delta F = F_1 - F_2$. Output $F_1$ is also connected to the input of "up" counter 33 and input $F_2$ is connected to the input of "down" counter 34.

The output of the two counters 33 and 34 is connected to the inputs of an 8-bit adder means 35. The adder means may comprise an adder or may comprise an adder #1 followed by an adder #2. The output of the adder means is connected to a digital-to-analog converter (DAC) 40. The output of the DAC 40 is connected through an amplifier 41 to the phase modulator 20. The bias modulator 21 provides proper signals to the PSD 24 and to the adder #2. If adder #2 is not included then the bias modulator signal is instead summed at summing amplifier 41. A strobe circuit 42 is connected to the DAC 40 to strobe the DAC anytime a transition occurs.

The operation of the electrical circuit operates as follows. The output of the integrator 25 which is nonzero when the gyro is rotated, is fed with opposite polarity to VCO 32 compared to VCO 31. This results in VCO 31 outputting a higher frequency than VCO 32. Thus counter 33 counts sequentially up faster than counter 34 counts sequentially down. The binary words out of the counters 33 and 34 ($\psi_u(t)$, $\psi_d(t)$) are applied to adder #1. The output of adder #1 ($\psi_1(t)$) is summed with the binary square wave modulation ($w_b(t)$) in adder #2. The output of adder #2 ($\psi_2(t)$) is converted in the digital-to-analog converter 40 to the analog serrodyne signal $\psi_3(t)$. Amplification is normally required with the more customary serrodyne signal $\psi(t)$ being applied to the phase modulator 20. Loop closure obtains since a phase ramp with the proper slope is applied.

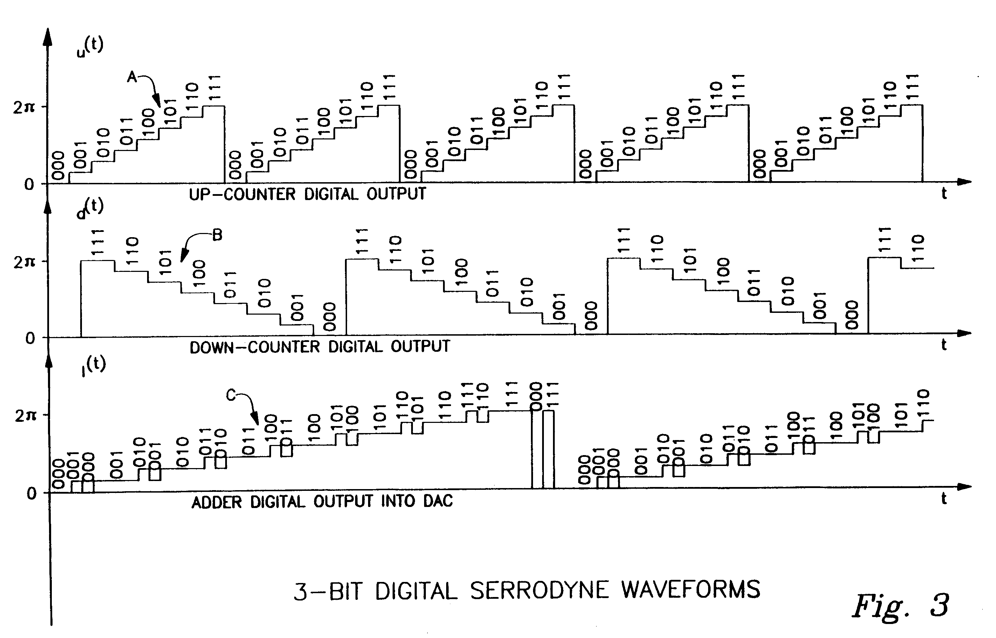

Referring now to Figure 3 there are shown symbolic waveforms of the up-counter 33 digital output, the down-counter 34 digital output and the adder 35 digital output into the digital-to-analog converter (DAC) 40. The waveforms are referred to as symbolic because it will be appreciated that the serrodyne signals are digital words until the final digital to analog conversion. The equivalent analog signal is shown for representation only. In actuality the up and down counters may preferably be 8-bit (or higher) counters, however in the representative waveforms A, B and C of Figure 3 a 3-bit digital synthetic serrodyne system has been shown. Thus in waveform A representing the "up" counter output, the progressive eight bits in the count from 000 up through 111 are shown and repeated five times. In waveform B representing the down counter output, the progressive eight bits stepping downward are shown and repeated about three times. These two counter outputs are added together in the adder means 35 and waveform C represents the adder means digital output into the DAC 40. It will be appreciated that the strobe circuit 42 causes the DAC to convert anytime an event occurs in the VCO's or bias modulation. This DAC timing pulse, which is necessarily of short duration, strobes the DAC the minimum times needed in order to prevent extra DAC glitches.

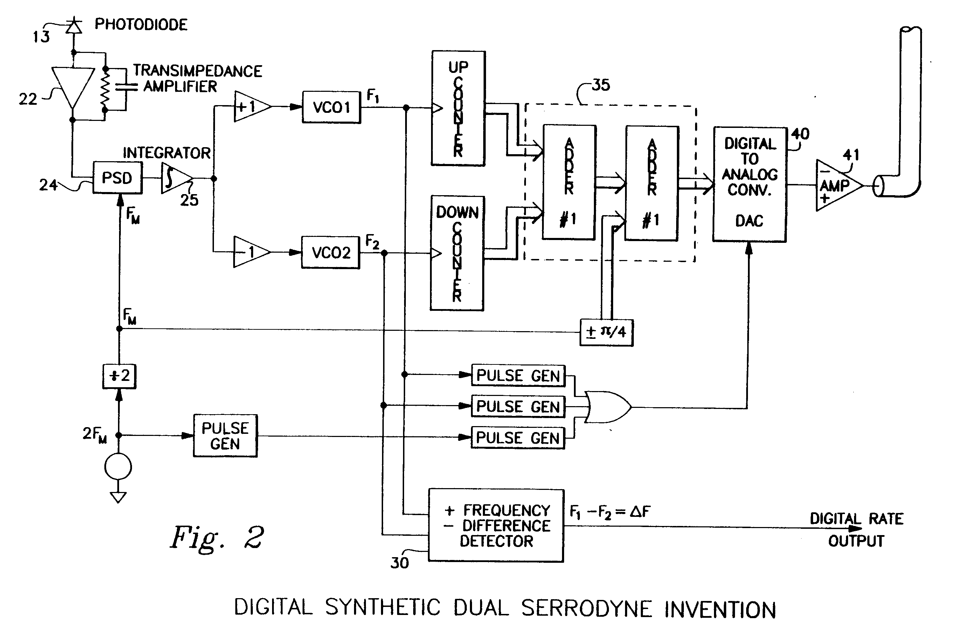

Figure 2 shows an embodiment having two adders with the outputs of the counters 33 and 34 feeding the adder #1. The output of the adder #1 feeds one input of adder #2 and a bias modulation signal is inputted to the other input of adder #2, however, it is possible to eliminate adder #2 and the digital squarewave modulation. Then the bias, which can be sinusoidal or squarewave is summed into the amplifier 41 as shown in the embodiment of Figure 1. This bias modulation can be applied in several equivalent ways using our basic approach.

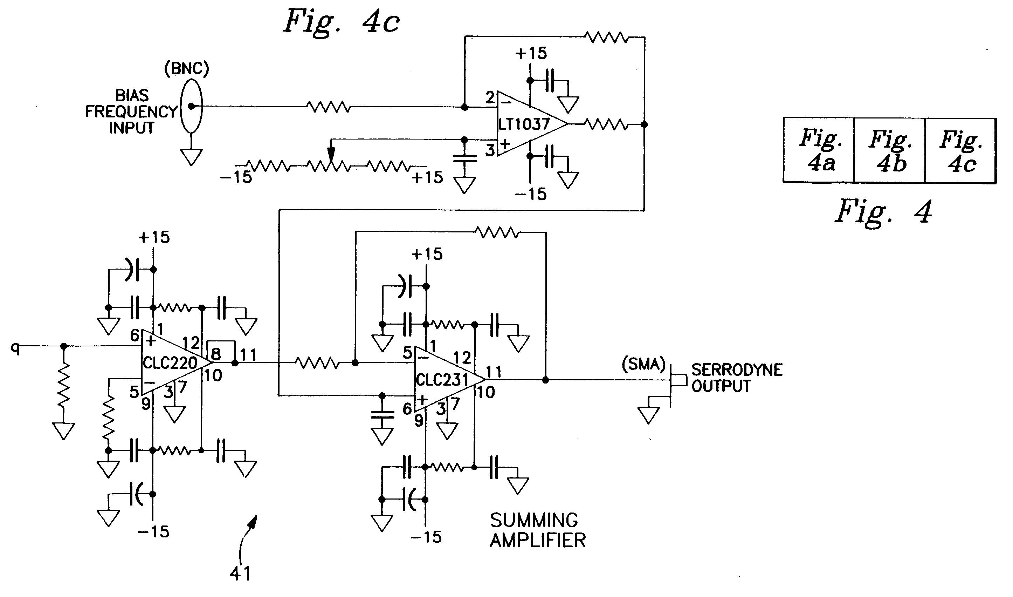

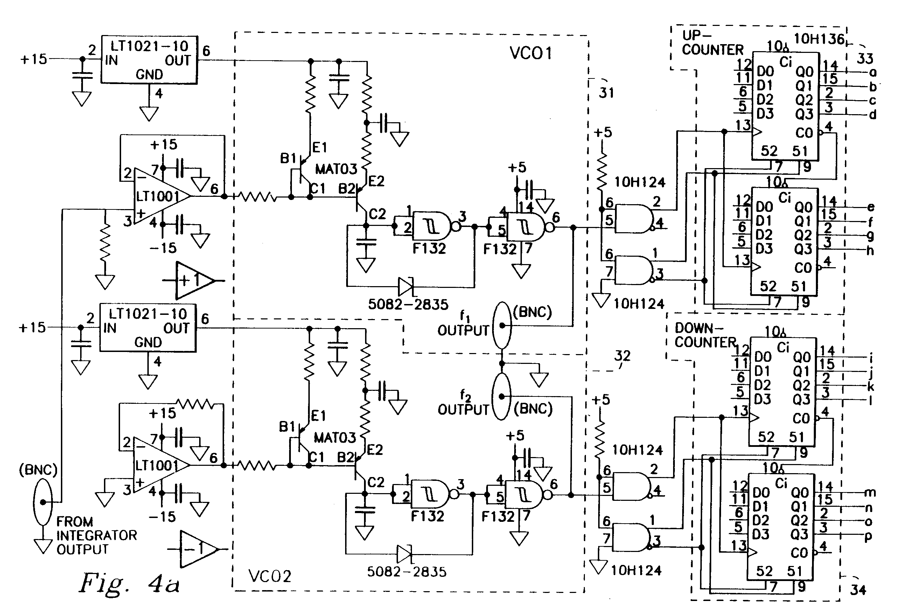

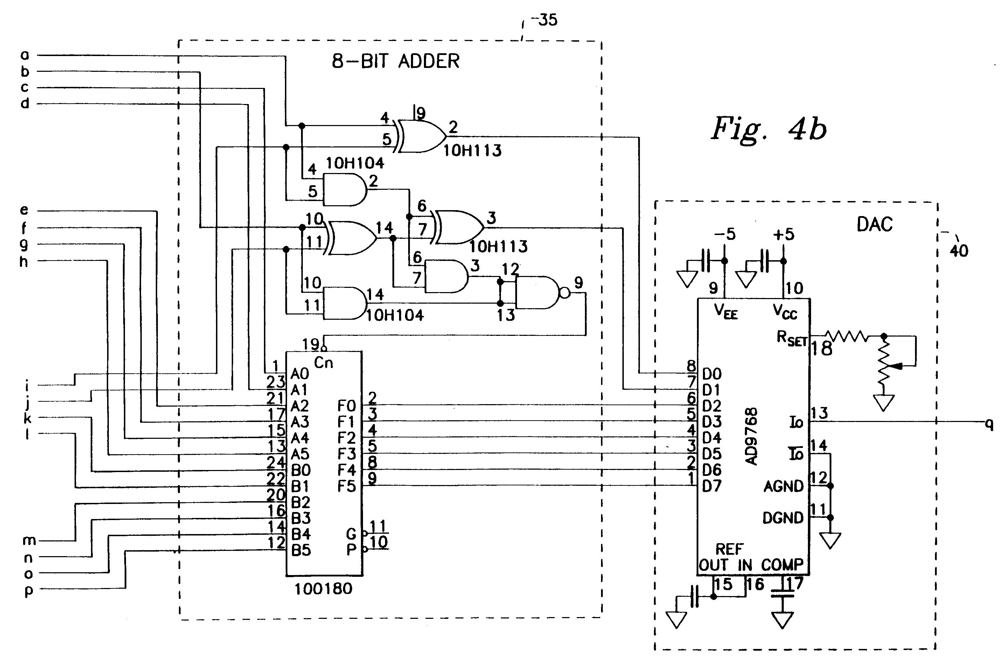

Figure 4 comprising Figs. 4a, b and c is one example of a schematic diagram of part of the electrical portion of the block diagram of Figure 1. Figure 4 includes a schematic of the VCO1 and VCO2, the up counter 33, the down counter 34, the 8-bit adder 35, the digital-to-analog converter 40 and the summing amplifier 41. Each of these sections of the circuit has been outlined with dashed line enclosures and numbered the same as in Figure 1.

The invention disclosed herein has a number of advantages including:

a) Optimum reset time is achieved since only one op-amp (amplifier) is needed.

b) The digital approach is easier to productize since application specific integrated circuits can be applied. Cost and reproducibility issues are favorably affected.

c) Gyro bias and bias stability errors are not generated because baseband frequency shifting is employed.

d) There are no dynamic response problems at low rates since the novel digital waveform provides smooth baseband operation.

e) The single modulator design eliminates imperfect aging or temperature tracking problems associated with two modulators.

f) The applied frequency count indicates the applied rate to the gyro.

g) If a $2\pi$ phase deviation servo is required, a single servo loop suffices.

h) Bias modulation can be simply added either digitally (square wave modulation) or by analog (sinusoidal modulation) methods.

## Claims

1. Synthetic serrodyne phase difference controller for a rotation sensor capable of sensing rotation about an axis of an optical fiber coil (10) based on having a pair of electromagnetic waves propagating through the optical fiber coil in opposite directions to both impinge on a photodetector (13) with a phase difference relationship therebetween, comprising

a phase detector means (24) having an input electrically connected to said photodetector (13) to receive an output signal therefrom representative of phase differences occurring in pairs of electromagnetic waves impinging thereon, said phase detector means being capable of providing an output signal on an output thereof representative of both magnitude and direction of said phase differences indicated by said photodetector output signal;

a generator means comprising a digital positive serrodyne generator (26) and a digital negative serrodyne generator (27) having inputs electrically connected to said phase detector means (24) output to receive said phase detector means output signal, said generator means having first and second outputs and being capable of providing a pair of output signals including a first digital output signal at said first output thereof and a second digital output signal at said second output thereof, said first digital output signal having a basic waveform portion repeated at selected frequencies consisting of a relatively long duration of substantially increasing magnitude followed by a much shorter duration of substantially decreasing magnitude, said second digital output signal having a basic waveform portion repeated at selected frequencies consisting of a relatively long duration of substantially decreasing magnitude followed by a much shorter duration of substantially increasing magnitude, said frequencies of said first and second output signals being determined by said phase detector means output signal;

digital adder means (35) having an input with terminals electrically connected to said first output of said generator means to receive said first digital output signal therefrom, and said adder means input having terminals electrically connected to said second output of said generator means to receive said second digital output signal therefrom, to digitally add together said first and second digital signals therein, said adder means providing a digital output signal representative of the added signals;

digital to analog converter means (40) having input means electrically connected to receive said adder means digital output signal, said converter means providing an analog output signal at output means representative of the digital signal received; and

an optical phase modulator (20) electrically connected to said converter means output means to receive said analog output signal, said optical phase modulator being positioned in series with said optical fiber coil so that the pair of electromagnetic waves traversing said coil also traverses said optical phase modulator and are affected thereby.

2. Controller according to claim 1, **characterized in that** said generator means (26, 27) first and second output signals each are at selected initial frequencies if substantially no rotation is occurring about said axis of said coiled optical fiber, with said generator means first output signal being at other frequencies if rotation is occurring about said axis of said coiled optical fiber.

3. Controller according to claim 1**, characterized in that** said first and second output signals of said generator means are each substantially a sawtooth waveform.

4. Controller according to claim 1, **characterized in that** said signal generator means contains an integrating means (25) which has an output thereof electrically connected to said digital positive and negative serrodyne generators (26, 27) inputs.

5. Controller according to claim 1, **characterized in that** said generator means (26, 27) contains a pair of voltage controlled oscillator means (31, 32), one having an input thereof electrically connected to said digital positive serrodyne generator (26) input and that one remaining having an input thereof electrically connected to said digital negative serrodyne generator (27) input through a polarity inverter (32'), said pair of voltage controlled oscillator means each having an output electrically connected to an input of a corresponding digital counter means (33, 34), each said digital counter means having an output that is electrically connected to an input of said digital adder means (35).

6. Controller according to claim 1, **characterized in that** said digital adder means (35) comprises a first digital adder receiving said first and second digital outputs from said generator means (26, 27) to digitally add together said first and second digital outputs, the first digital adder having an output connected to one input of a second digital adder.

7. Synthetic serrodyne phase difference controller for a rotation sensor capable of sensing rotation about an axis of an optical fiber coil (10) based on having a pair of electromagnetic waves propagating through the optical fiber coil in opposite directions, comprising photodetector means (13, 14) for detecting a pair of electromagnetic waves which are propagating through an optical fiber coil (10) and which detected waves may have a phase difference relationship therebetween, said photodetector means having an electrical output signal proportional to the intensity of the two waves impinging thereon;

a phase detector means (24) having an input electrically connected to said photodetector means (13, 14) to receive the output signal therefrom representative of the phase differences occurring in the electromagnetic waves impinging thereon, said phase detector means being capable of providing an output signal on an output thereof representative of both magnitude and direction of said phase differences indicated by said photodetector output signal;

integrating means (25) having input terminals electrically connected to said phase detector means (24) output, said integrating means having an output;

first and second voltage controlled oscillators (31, 32), the first having an input thereof electrically connected to said integrating means output, the second having an input thereof electrically connected to said integrating means output through a polarity inverter (32'), said first and second VCO's (31, 32) each having an output;

first and second digital counter means (33, 34) each having an input and an output, said first counter operating as an "up" counter and said second counter operating as a "down" counter, the output of said first and second VCO, respectively, electrically connected to the input of said first and second digital counter means;

digital adder means (35) having input means and output means, said first and second digital counter means outputs being electrically connected to the input means of said digital adder means to receive the digital counter output signal from each counter and to digitally add together said first and second digital signals, said adder means providing a digital output signal representative of the added signals;

digital to analog converter means (40) having input means electrically connected to receive said adder means digital output signal, said converter means providing an analog output signal at output means representative of the digital signal received; and

an optical phase modulator (20) electrically connected to said converter means (40) output means to receive said analog output signal, said optical phase modulator being positioned in series with said optical fiber coil (10) so that the pair of electromagnetic waves traversing said coil also traverses said optical phase modulator and the respective phase relations of the pair of waves are affected thereby.

**Patentansprüche**

1. Synthetische Sägezahn-Phasendifferenzsteuerung für einen Rotationssensor, der eine Drehung um eine Achse einer optischen Faserspule (10) auf der Basis erfassen kann, daß ein Paar elektromagnetischer Wellen sich durch die optische Faser in entgegengesetzten Richtungen fortpflanzt, so daß beide auf einem Photodetektor (13) mit einer Phasendifferenzbeziehung dazwischen auftreffen, aufweisend eine Phasendetektoreinrichtung (24), die mit einem Eingang elektrisch an den Photodetektor (13) angeschlossen ist, um ein Ausgangssignal entsprechend der Phasendifferenz zu empfangen, die in Paaren von darauf auftreffenden elektromagnetischen Wellen auftreten, wobei die Phasendetektoreinrichtung in der Lage ist, ein Ausgangssignal an einem Ausgang zu liefern entsprechend sowohl der Größe, als auch der Richtung der Phasendifferenz, die durch das Ausgangssignal des Photodetektors angezeigt wird;
eine Generatoreinrichtung, die einen digitalen positiven Sägezahngenerator (26) und einen digitalen negativen Sägezahngenerator (27) umfaßt, die mit Eingängen elektrisch an die Phasendetektoreinrichtung (24) angeschlossen sind, um das Phasendetektor-Ausgangssignal zu empfangen, wobei die Generatoreinrichtung erste und zweite Ausgänge aufweist und in der Lage ist, ein Paar von Ausgangssignalen zu liefern, welches ein erstes digitales Ausgangssignal an dem ersten Ausgang und ein zweites digitales Ausgangssignal an dem zweiten Ausgang umfaßt, wobei das erste digitale Ausgangssignal eine Grundimpulsform besitzt, die mit ausgewählten Frequenzen wiederholt wird und aus einer relativ langen Dauer von im wesentlichen ansteigender Größe besteht und von einer sehr viel kürzeren Dauer von im wesentlichen abnehmender Größe gefolgt wird, wobei das zweite digitale Ausgangssignal eine Grundimpulsform besitzt, die mit ausgewählten Frequenzen wiederholt wird und aus einer relativ langen Dauer von im wesentlichen abnehmender Größe besteht und von einer sehr viel kürzeren Dauer von im wesentlichen ansteigender Größe gefolgt wird, wobei die Frequenzen der ersten und zweiten Ausgangssignale durch das Ausgangssignal der Phasendetektoreinrichtung vorgegeben sind;
eine digitale Addiereinrichtung (35) mit Eingangsanschlüssen, die elektrisch an den ersten Ausgang der Generatoreinrichtung angeschlossen sind, um das erste digitale Ausgangssignal zu empfangen und mit Eingangsanschlüssen, die elektrisch an den zweiten Ausgang der Generatoreinrichtung angeschlossen sind, um das zweite digitale Ausgangssignal zu empfangen, um die ersten und zweiten digitalen Signale zu addieren, wobei die Addiereinrichtung ein digitales Ausgangssignal entsprechend der addierten Signale erzeugt;
eine Digital/Analog-Wandlereinrichtung (40), die mit ihrem Eingang elektrisch an das digitale Ausgangssignal der Addiereinrichtung angeschlossen ist, wobei die Wandlereinrichtung ein analoges Ausgangssignal am Ausgang entsprechend dem empfangenen digitalen Signal liefert; und
einen elektrisch an den Ausgang der Wandlereinrichtung angeschlossenen optischen Phasenmodulator (20), der das analoge Ausgangssignal empfängt, wobei der optische Phasenmodulator in Reihe mit der optischen Faserspule geschaltet ist, so daß das Paar der die Spule durchlaufenden elektromagnetischen Wellen ebenfalls den optischen Phasenmodulator durchläuft und durch diesen beeinflußt wird.

2. Steuerung nach Anspruch 1, **dadurch gekennzeichnet,** daß sich die ersten und zweiten Ausgangssignale der Generatoreinrichtung (26,27) jeweils auf ausgewählten Anfangsfrequenzen befinden, wenn im wesentlichen keine Rotation um die Achse der optischen Faserspule auftritt und daß sich das erste Ausgangssignal der Generatoreinrichtung auf anderen Frequenzen befindet, wenn eine Rotation um die Achse der optischen Faserspule auftritt.

3. Steuerung nach Anspruch 1, **dadurch gekennzeichnet,** daß die ersten und zweiten Ausgangssignale der Generatoreinrichtung im wesentlichen eine Sägezahnform aufweisen.

4. Steuerung nach Anspruch 1, **dadurch gekennzeichnet,** daß die Signalgeneratoreinrichtung eine Integrationseinrichtung (25) aufweist, die mit einem Ausgang elektrisch an die genannten digitalen positiven und negativen Sägezahngeneratoren (26,27) angeschlossen ist.

5. Steuerung nach Anspruch 1, **dadurch gekennzeichnet,** daß die Generatoreinrichtung (26,27) ein Paar von spannungsgesteuerten Oszillatoreinrichtungen (31,32) enthält, von denen eine mit einem Eingang elektrisch an den digitalen positiven Sägezahngenerator (26) angeschlossen ist und von denen die verbleibende mit einem Eingang elektrisch an den digitalen negativen Sägezahngenerator (27) über einen Polaritätsinverter (32') angeschlossen ist, wobei das Paar der spannungsgesteuerten Oszillatoreinrichtungen jeweils mit einem Ausgang elektrisch an einen Eingang einer entsprechenden digitalen Zähleinrichtung (33,34) angeschlossen ist und jede digitale Zähleinrichtung mit einem Ausgang elektrisch an einen Eingang der digitalen Addiereinrichtung (35) angeschlossen ist.

6. Steuerung nach Anspruch 1, **dadurch gekennzeichnet,** daß die digitale Addiereinrichtung (35) einen ersten digitalen Addierer umfaßt, dem die ersten und zweiten digitalen Ausgänge der Generatoreinrichtung (26,27) zugeführt werden, um die ersten und zweiten digitalen Ausgänge digital zu addieren, wobei der erste digitale Addierer mit einem Ausgang an einen Eingang eines zweiten digitalen Addierers angeschlossen ist.

7. Synthetische Sägezahn-Phasendifferenzsteuerung für einen Rotationssensor, der eine Drehung um eine Achse einer optischen Faserspule (10) auf der Basis erfassen kann, daß ein Paar elektromagnetischer Wellen sich durch die optische Faserspule in entgegengesetzten Richtungen fortpflanzt, umfassend eine Photodetektoreinrichtung (13,14) zur Erfassung eines Paares elektromagnetischer Wellen, die sich durch eine optische Faserspule (10) fortpflanzen und welche erfaßten Wellen eine Phasendifferenz zwischen sich aufweisen können, wobei die Photodetektoreinrichtung ein elektrisches Ausgangssignal proportional zu der Intensität der zwei auftreffenden Wellen liefert; eine Phasendetektoreinrichtung (24), die mit einem Eingang elektrisch an die Photodetektoreinrichtung (13,14) angeschlossen ist, um das Ausgangssignal entsprechend der in den auftreffenden elektromagnetischen Wellen auftretenden Phasendifferenz zu empfangen, wobei die Phasendetektoreinrichtung in der Lage ist, ein Ausgangssignal an einem Ausgang zu liefern, das sowohl der Größe als auch der Richtung der Phasendifferenzen entspricht, die durch das Ausgangssignal des Photodetektors angezeigt werden; eine Integrationseinrichtung (25), die mit Eingangsanschlüssen elektrisch an den Ausgang der Phasendetektoreinrichtung (24) angeschlossen ist und einen Ausgang besitzt; erste und zweite spannungsgesteuerte Oszillatoren (31,32), wobei der erste mit einem Eingang elektrisch an den Ausgang der Integrationseinrichtung angeschlossen ist, der zweite mit einem Eingang elektrisch über einen Polaritätsinverter (32') an die Integrationseinrichtung angeschlossen ist und der erste und zweite VCO (31,32) jeweils einen Ausgang aufweisen;
erste und zweite digitale Zähleinrichtungen (33,34), die jeweils einen Ein- und Ausgang aufweisen, wobei die erste Zähleinrichtung als ein Aufwärtszähler und die zweite Zähleinrichtung als ein Abwärtszähler arbeitet und der Ausgang des ersten und zweiten VCO elektrisch entsprechend an den Eingang der ersten und zweiten digitalen Zähleinrichtungen angeschlossen ist;
eine digitale Addiereinrichtung (35) mit Eingängen und einem Ausgang, wobei die Ausgänge der ersten und zweiten digitalen Zähleinrichtungen elektrisch mit den Eingängen der Addiereinrichtung verbunden sind, um das digitale Zähler-Ausgangssignal von jedem Zähler zu empfangen und die ersten und zweiten Digitalsignale miteinander digital zu addieren, wobei die Addiereinrichtung ein digitales Ausgangssignal entsprechend der addierten Signale erzeugt;
eine Digital/Analog-Wandlereinrichtung (40), deren Eingang elektrisch an die Addiereinrichtung angeschlossen ist, um deren digitales Ausgangssignal zu empfangen, wobei die Wandlereinrichtung ein analoges Ausgangssignal entsprechend dem empfangenen digitalen Signal am Ausgang liefert; und
einen elektrisch an den Ausgang der Wandlereinrichtung (40) angeschlossenen optischen Phasenmodulator (20), der das analoge Ausgangssignal empfängt, wobei der optische Phasenmodulator in Reihe mit der optischen Faserspule (10) geschaltet ist, so daß das Paar der die Spule durchlaufenden elektromagnetischen Wellen ebenfalls den optischen Phasenmodulator durchläuft und die entsprechenden Phasenbeziehungen des Paares von Wellen hierdurch beeinflußt werden.

**Revendications**

1. Système de commande à différence de phase serrodyne synthétique pour un capteur de rotation capable de détecter une rotation autour d'un axe d'une bobine en fibre optique (10) selon le principe d'une paire d'ondes électromagnétiques qui se propagent dans la bobine en fibre optique dans des directions opposées afin de frapper toutes deux un photodétecteur (13) avec une relation de différence de phase entre elles, comportant

des moyens des détection de phase (24) ayant une entrée reliée électriquement audit photodétecteur (13) afin de recevoir un signal de sortie de celui-ci représentatif des différences de phase apparaissant dans des paires d'ondes électromagnétiques qui le frappent, lesdits moyens de détection de phase pouvant délivrer un signal de sortie sur une sortie de celui-ci représentatif à la fois de l'amplitude et de la direction desdites différences de phase indiquées par ledit signal de sortie de photodétecteur;

des moyens de génération comportant un générateur serrodyne positif numérique (26) et un générateur serrodyne négatif numérique (27) ayant des entrées reliées électriquement à ladite sortie de moyens de détection de phase (24) afin de recevoir ledit signal de sortie des moyens de détection de phase, lesdits moyens de génération ayant des première et deuxième sorties et pouvant délivrer une paire de signaux de sortie comprenant un premier signal de sortie numérique au niveau de ladite première sortie de ceux-ci et un deuxième signal de sortie numérique au niveau de ladite deuxième sortie de ceux-ci, ledit premier signal de sortie numérique ayant une partie de forme d'onde de base répétée à des fréquences choisies consistant en une durée relativement longue d'amplitude sensiblement croissante suivie par une durée bien plus courte d'amplitude sensiblement décroissante, ledit deuxième signal de sortie numérique ayant une partie de forme d'onde de base répétée à des fréquences choisies consistant en une durée relativement longue d'amplitude sensiblement décroissante suivie par une durée bien plus courte d'amplitude sensiblement croissante, lesdites fréquences desdits premier et deuxième signaux de sortie étant déterminées par ledit signal de sortie des moyens de détection de phase;

des moyens d'addition numériques (35) ayant une entrée avec des bornes reliées électriquement à ladite première sortie desdits moyens de génération afin de recevoir ledit premier signal de sortie numérique de ceux-ci, et ladite entrée des moyens d'addition ayant des bornes reliées électriquement à ladite deuxième sortie desdits moyens de génération afin de recevoir ledit deuxième signal de sortie numérique de ceux-ci, afin d'additionner de manière numérique lesdits premier et deuxième signaux numériques, lesdits moyens d'addition délivrant un signal de sortie numérique représentatif des signaux additionnés;

des moyens de conversion numérique-analogique (40) ayant des moyens d'entrée reliés électriquement afin de recevoir ledit signal de sortie numérique des moyens d'addition, lesdits moyens de conversion délivrant un signal de sortie analogique aux moyens de sortie représentatif du signal numérique reçu; et

un modulateur de phase optique (20) relié électriquement aux dits moyens de sortie de moyens de conversion afin de recevoir ledit signal de sortie analogique, ledit modulateur de phase optique étant positionné en série avec ladite bobine en fibre optique de sorte que la paire d'ondes électromagnétiques qui traverse ladite bobine traverse également ledit modulateur de phase optique et y est affectée.

2. Système de commande selon la revendication 1, caractérisé en ce que lesdits premier et deuxième signaux de sortie des moyens de génération (26, 27) sont chacun à des fréquences initiales choisies si sensiblement aucune rotation n'apparaît autour dudit axe de ladite fibre optique bobinée, et en ce que ledit premier signal de sortie des moyens de génération est à d'autres fréquences si une rotation apparaît autour dudit axe de ladite fibre optique en bobine.

3. Système de commande selon la revendication 1, caractérisé en ce que lesdits premier et deuxième signaux de sortie desdits moyens de génération sont chacun sensiblement avec une forme d'onde en dent de scie.

4. Système de commande selon la revendication 1, caractérisé en ce que lesdits moyens de génération de signal contiennent des moyens d'intégration (25) qui ont une sortie reliée électriquement aux dites entrées des générateurs serrodynes numériques positif et négatif (26, 27).

5. Système de commande selon la revendication 1, caractérisé en ce que lesdits moyens de génération (26, 27) contiennent une paire de moyens d'oscillation commandés en tension (31, 32), l'un ayant une entrée reliée électriquement à l'entrée dudit générateur serrodyne positif numérique (26) et l'autre ayant une entrée reliée électriquement à l'entrée dudit générateur serrodyne négatif numérique (27) au moyen d'un inverseur de polarité (32'), ladite paire de moyens d'oscillation commandée en tension ayant pour chacun une sortie reliée électriquement à une entrée de moyens de comptage numériques (33, 34) correspondants, chacun desdits moyens de comptage numériques ayant une sortie qui est reliée électriquement à une entrée desdits moyens d'addition numériques (35).

6. Système de commande selon la revendication 1, caractérisé en ce que lesdits moyens d'addition numériques (35) comprennent un premier additionneur numérique recevant lesdites première et deuxième sorties numériques desdits moyens de génération (26, 27) afin d'additionner numériquement lesdites première et deuxième sorties numériques, le premier additionneur numérique ayant une sortie reliée à une entrée d'un deuxième additionneur numérique.

7. Système de commande à différence de phase serrodyne synthétique pour un capteur de rotation capable de détecter une rotation autour d'un axe d'une bobine en fibre optique (10) selon le principe d'une paire d'ondes électromagnétiques qui se propagent dans la bobine en fibre optique dans des directions opposées, comportant

des moyens de photodétection (13, 14) destinés à détecter une paire d'ondes électromagnétiques qui se propagent dans une bobine en fibre optique (10), les ondes détectées pouvant avoir une relation de différence de phase entre elles, lesdits moyens de photodétection ayant un signal de sortie électrique proportionnel à l'intensité des deux ondes qui les frappent;

des moyens de détection de phase (24) ayant une entrée reliée électriquement aux dits moyens de photodétection (13, 14) afin de recevoir un signal de sortie de ceux-ci représentatif des différences de phase apparaissant dans les ondes électromagnétiques qui les frappent, lesdits moyens de détection de phase pouvant délivrer un signal de sortie sur une sortie de ceux-ci représentatif à la fois de l'amplitude et de la direction desdites différences de phase indiquées par ledit signal de sortie de photodétecteur;

des moyens d'intégration (25) ayant des bornes d'entrée reliées électriquement à la sortie desdits moyens de détection de phase (24), lesdits moyens d'intégration (25) ayant une sortie;

des premier et deuxième oscillateurs commandés en tension (31, 32), le premier ayant une entrée reliée électriquement à la sortie desdits moyens d'intégration, le deuxième ayant une entrée reliée électriquement à la sortie desdits moyens d'intégration via un inverseur de polarité (32'), lesdits premier et deuxième oscillateurs commandés en tension (31, 32) ayant chacun une sortie;

des premier et deuxième moyens de comptage numériques (33, 34) ayant chacun une entrée et une sortie, ledit premier compteur fonctionnant comme compteur "ascendant" et ledit deuxième compteur fonctionnant comme compteur "descendant", la sortie desdits premier et deuxième oscillateurs commandés en tension étant respectivement reliée électriquement à l'entrée desdits premier et deuxième moyens de comptage numérique ;

des moyens d'addition numériques (35) ayant des moyens d'entrée et des moyens de sortie, lesdites sorties des premier et deuxième moyens de comptage numériques étant reliées électriquement aux moyens d'entrée desdits moyens d'addition numériques afin de recevoir le signal de sortie de compteur numérique de chaque compteur et afin d'additionner de manière numérique lesdits premier et deuxième signaux numériques, lesdits moyens d'addition délivrant un signal de sortie numérique représentatif des signaux additionnés;

des moyens de conversion numérique-analogique (40) ayant des moyens d'entrée reliés électriquement afin de recevoir ledit signal de sortie numérique des moyens d'addition, lesdits moyens de conversion délivrant un signal de sortie analogique aux moyens de sortie représentatif du signal numérique reçu; et

un modulateur de phase optique (20) relié électriquement aux dits moyens de sortie de moyens de conversion (40) afin de recevoir ledit signal de sortie analogique, ledit modulateur de phase optique étant positionné en série avec ladite bobine en fibre optique (10) de sorte que la paire d'ondes électromagnétiques qui traverse ladite bobine traverse également ledit modulateur de phase optique et les relations de phase respectives desdites ondes de la paire y sont affectées.

*Fig. 1*

SYNTHETIC DIGITAL SERRODYNE MODULATOR

Fig. 2

DIGITAL SYNTHETIC DUAL SERRODYNE INVENTION

EP 0 412 468 B1

3-BIT DIGITAL SERRODYNE WAVEFORMS

Fig. 3

EP 0 412 468 B1

# Fig. 4c

BIAS FREQUENCY INPUT (BNC)

LT1037

+15

−15 +15

| Fig. 4a | Fig. 4b | Fig. 4c |

## Fig. 4

CLC220

CLC231

(SMA) SERRODYNE OUTPUT

SUMMING AMPLIFIER

41

EP 0 412 468 B1

Fig. 4a

15

Fig. 4b

EP 0 412 468 B1